(19) **Europäisches Patentamt / European Patent Office / Office européen des brevets**

(11) **EP 1 640 062 B1**

(12) **FASCICULE DE BREVET EUROPEEN**

(45) Date de publication et mention
de la délivrance du brevet:
**30.01.2019 Bulletin 2019/05**

(51) Int Cl.:
**B01J 8/04** (2006.01)

(21) Numéro de dépôt: **05291929.7**

(22) Date de dépôt: **16.09.2005**

(54) **Réacteur à lit fixe de catalyseur comportant des moyens de dérivation des écoulements à travers le lit et procédé l'utilisant**

Katalytischer Festbettreaktor mit Bypass mittels durch das Bett und Verfahren mit Verwendung dieser Vorrichtung

Fixed catalytic bed reactor with by-pass means through the bed and process using it

(84) Etats contractants désignés:
**DE GB IT NL**

(30) Priorité: **28.09.2004 FR 0410286**

(43) Date de publication de la demande:
**29.03.2006 Bulletin 2006/13**

(73) Titulaire: **IFP Energies nouvelles**
**92500 Rueil-Malmaison (FR)**

(72) Inventeurs:
• **Boyer, Christophe**
**69390 Charly (FR)**

• **Koudil, Abdelhakim**
**69001 Lyon (FR)**

(74) Mandataire: **IFP Energies nouvelles**
**Rond-point de l'échangeur de Solaize**
**BP3**
**69230 Solaize (FR)**

(56) Documents cités:
**US-A- 3 498 752        US-A- 5 939 031**
**US-A1- 2002 081 249**

## Description

Domaine de l'invention

L'invention concerne le domaine des dispositifs comportant au moins un lit de particules solides à travers lequel on fait s'écouler un fluide liquide et/ou gazeux. Ce domaine englobe, en particulier, celui des réacteurs dans lesquels des réactifs, sous une forme liquide et/ou gazeuse, traversent un ou plusieurs lit(s) fixe(s) de catalyseurs.

L'invention est particulièrement bien adaptée aux dispositifs dans lesquels les lits de particules solides ont tendance à se colmater et entraîner des pertes de pression pouvant devenir rédhibitoire, voire aller jusqu'à l'arrêt du dispositif, si aucun moyen de dérivation n'est mis en oeuvre.

Art antérieur

Le brevet américain US 3,796,655 décrit un procédé dans lequel un fluide de réactifs contenant des particules solides traverse un lit de catalyseur, lesdits solides formant progressivement une croûte à l'entrée du lit et augmentant ainsi la pression différentielle à travers ledit lit. Dans le cas où la pression différentielle du lit dépasserait un certain seuil, un conduit équipé de moyens sensibles à une élévation de la pression différentielle, tels qu'un disque de rupture, est mis en oeuvre pour injecter, en aval de la croûte ainsi formée, un flot de fluide à l'intérieur du lit de catalyseur. Un tel procédé présente l'inconvénient d'engendrer des variations brutales du débit de réactifs et de la pression différentielle à travers le lit, ce qui peut être préjudiciable à une utilisation optimale du catalyseur. D'autre part, les variations brutales de pression au cours de l'opération de ces procédés peuvent également déclencher, de manière intempestive et non réversible, l'écoulement de fluide dans le conduit.

Le brevet américain US 5,939,031 décrit un réacteur pour faire réagir un liquide avec un gaz de traitement en présence d'un catalyseur, le gaz et le liquide s'écoulant à contre-courant. Le réacteur comporte un lit de catalyseur surmonté d'un plateau de distribution du liquide qui s'écoule de manière descendante ainsi qu'un dispositif de dérivation de ce lit pour permettre de dévier une portion dudit liquide. Le dispositif de dérivation est muni de moyens de régulation pour réguler la quantité de liquide dévié par ce dispositif. Le dispositif de dérivation comporte également un conduit comprenant une section supérieure en communication fluidique avec du liquide accumulé sur le plateau de distribution, de manière à former une fermeture étanche, et une section inférieure équipée d'un clapet pour éviter toute remontée de gaz dans le dispositif de dérivation lorsqu'il n'est pas traversé par le liquide. Les moyens de régulations du dispositif de dérivation sont mis en oeuvre en fonction du niveau de liquide dans le plateau de distribution lorsque le lit est colmaté et l'écoulement du liquide est réalisé par effet siphon entre un niveau haut de liquide déclenchant ledit effet et un niveau bas de liquide mettant fin à cet effet siphon, ce qui permet ainsi de réguler la quantité de liquide dévié. Tant que le lit n'est pas colmaté, même si la différence de pression augmente, le dispositif de dérivation ne se déclenche pas.

L'inconvénient des techniques de l'art antérieur est que leurs mises en oeuvre a tendance à générer des variations importantes du débit d'écoulement et/ou de la pression à travers le lit de particules solides. Ces variations peuvent générer des instabilités, plus ou moins périodiques, ou des arrêts ponctuels de l'écoulement du fluide à travers le lit.

Description sommaire de l'invention

L'objectif principal de l'invention est de fournir des moyens de dérivation (by-pass selon la terminologie anglo-saxonne) d'un lit de particules solides permettant de dévier une partie de l'écoulement d'un fluide quand la pression différentielle au travers dudit lit dépasse un seuil donné, et permettant de réguler, en continu, le débit de ce fluide dans le dispositif de dérivation et/ou la pression différentielle à travers le lit.

L'invention porte donc sur un dispositif pour la circulation d'un fluide gazeux et/ou liquide à travers au moins un lit de particules solides équipé d'au moins un moyen de dérivation comportant un conduit dont l'extrémité supérieure débouche au-dessus de la surface supérieure du lit de catalyseur et l'extrémité inférieure débouche au-dessous de ladite surface, et une vanne réalisée de manière à être actionnée en position ouverte lorsque la pression différentielle à travers le lit de particules solides est supérieure à une valeur prédéterminée. Par rapport aux installations de l'art antérieur, la vanne du dispositif de dérivation comporte des moyens permettant de faire varier automatiquement la section de passage du fluide dans ladite vanne en fonction du débit du fluide.

Brève description des figures

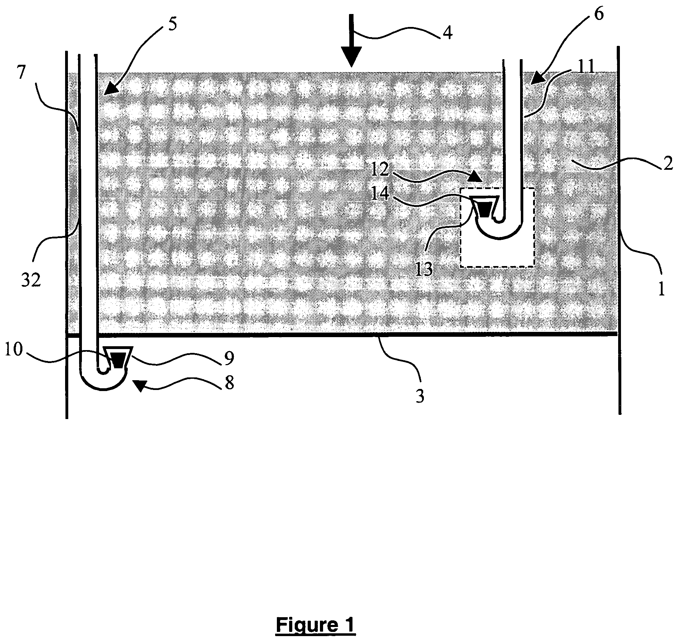

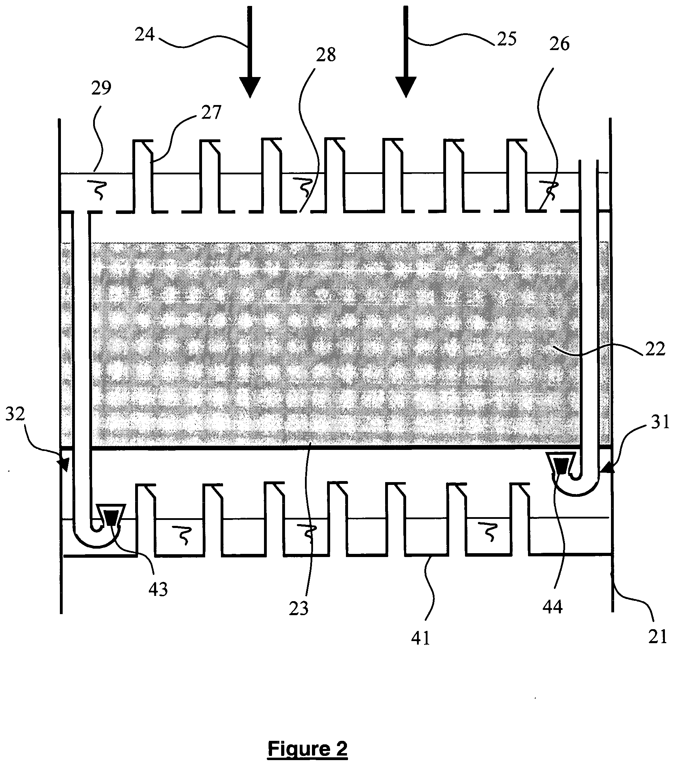

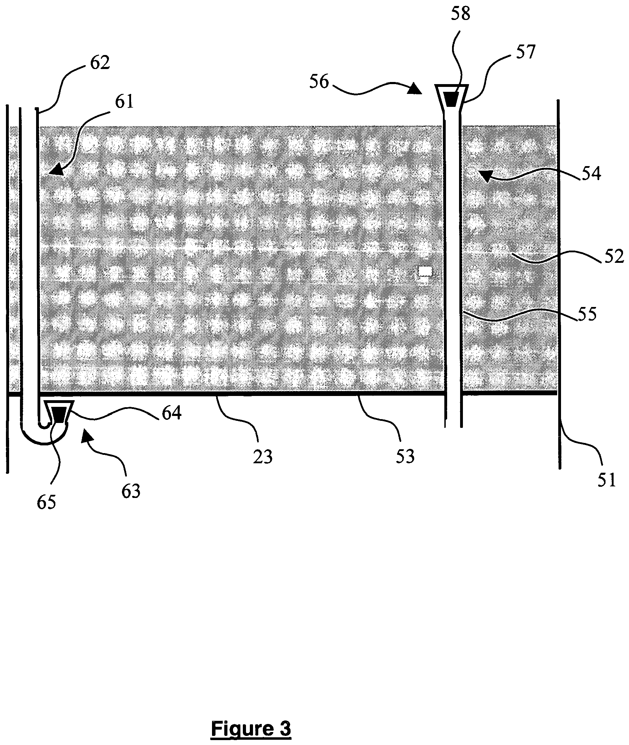

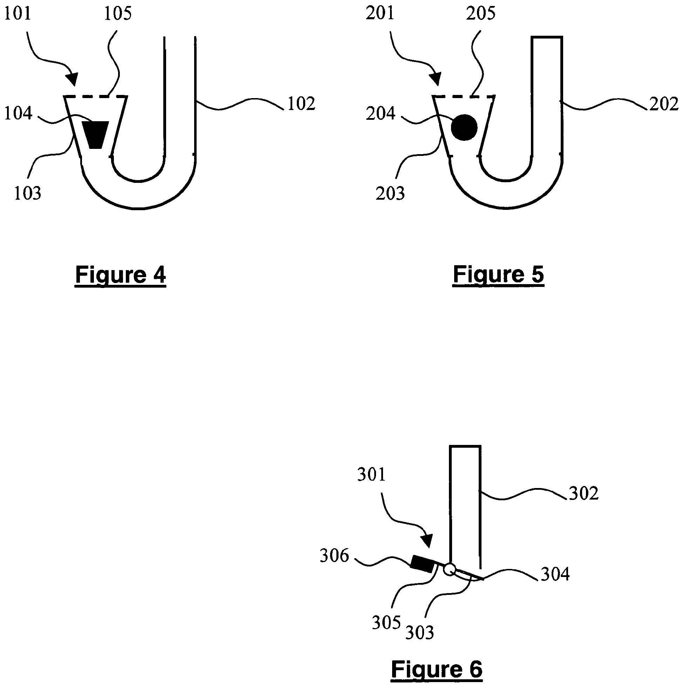

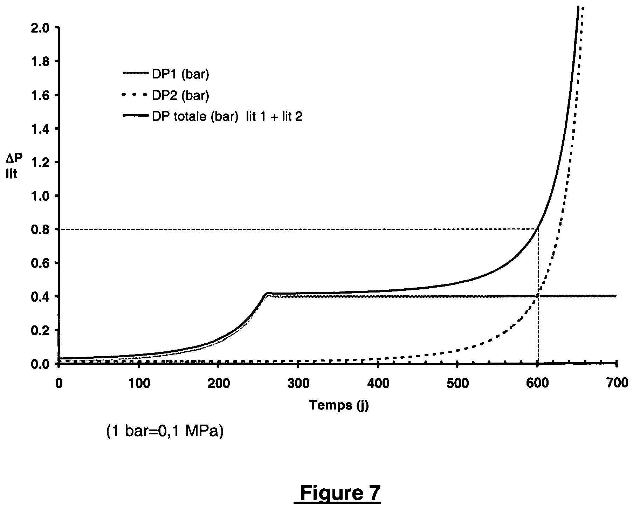

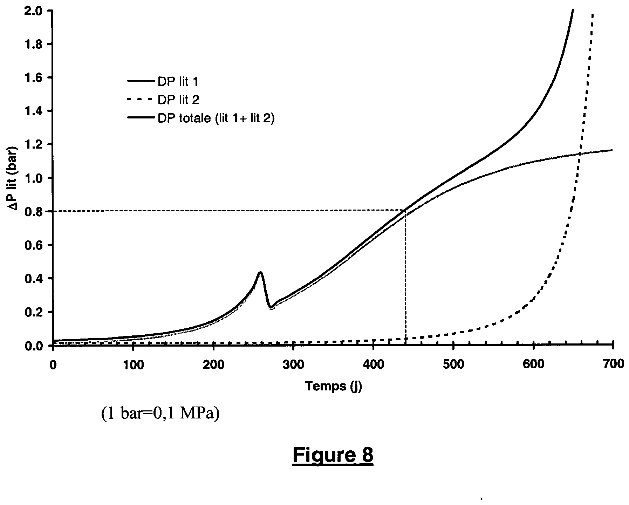

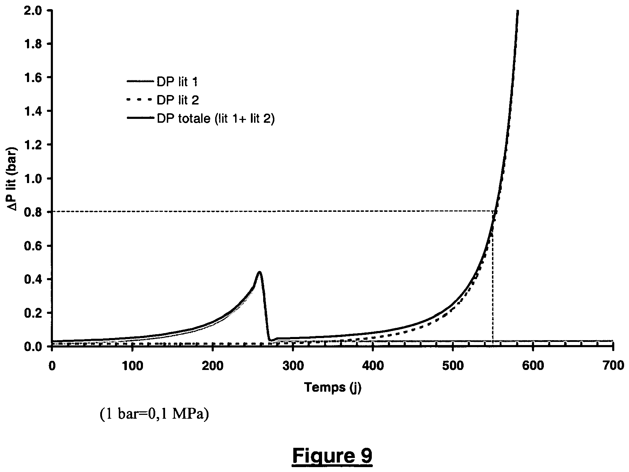

La Figure 1 représente, de manière non limitative, un mode de réalisation du dispositif de l'invention comprenant une enceinte, un lit granulaire et deux dispositifs de dérivation qui contournent tout ou partie du lit. La Figure 2 représente, de manière non limitative, un autre mode de réalisation du dispositif de l'invention dans lequel on est en présence d'un écoulement diphasique descendant de gaz et de liquide. La Figure 3 représente, de manière non limitative, encore un autre mode de réalisation correspondant à un écoulement contre-courant de gaz et de liquide. Les Figures 4 à 6 représentent, de manière non limitative, des modes de réalisation de vanne du moyen de dérivation selon l'invention. Les Figures 7 à 9 représentent, dans le cadre des exemples, l'évolution en fonction du temps de la pression différentielle à travers chaque lit, DP1 et DP2, et la pression différentielle totale DP1+DP2, d'un dispositif présentant deux lits de particules solides. La Figure 7 correspond à un dispositif selon l'invention. Les Figures 8 et 9 correspondent à des dispositifs selon l'art antérieur.

Description détaillée de l'invention

Un objet de l'invention est donc de fournir un dispositif pour la circulation d'un fluide gazeux et/ou liquide à travers au moins un lit de particules solides selon la revendication 1 et un procédé selon la revendication 7.

Les moyens permettant de faire varier automatiquement la section de passage du fluide dans la vanne du moyen de dérivation en fonction du débit peuvent avantageusement être des moyens de type mécanique. Ces moyens peuvent également incorporer des composantes de commande, reliées à la vanne, par exemple des composantes de commande électrique, et permettant une commande de celle-ci à l'extérieur du dispositif de l'invention. Ces moyens peuvent comporter, en outre, des composantes de mesure du débit du fluide à travers la vanne, et être intégrés dans une boucle de régulation.

Ces moyens peuvent ainsi comporter n'importe quelle composante de commande et/ ou de régulation connue de l'homme du métier.

De manière plus précise, les moyens permettant de faire varier automatiquement la section de passage du fluide dans la vanne en fonction du débit dudit fluide peuvent être tels que la section de passage, A, de la vanne et le débit, Q, à travers ladite vanne varient de manière à ce que le rapport

$$\frac{A}{A_o} * \frac{Q}{Q_o}$$

soit compris entre 0,1 et 10, Ao et Qo correspondant respectivement à la section de passage et au débit nominal de la vanne.

Selon un mode de réalisation préférée, la vanne du moyen de dérivation comporte :-une portion tubulaire évasée dont l'orifice ayant la plus petite section est reliée à une extrémité du conduit du dispositif de dérivation,-une pièce mobile montée dans ladite portion tubulaire évasée de manière à autoriser un déplacement entre une position de fermeture et une position d'ouverture maximale, le positionnement de la pièce mobile étant fonction du débit de fluide dans ladite portion tubulaire évasée, et

- un moyen de rappel agissant sur la pièce mobile pour la déplacer vers la position de fermeture dans laquelle la pièce mobile obstrue l'orifice de la portion tubulaire évasée ayant la plus petite section.

De préférence, le moyen de rappel agit par la force de gravité de la pièce mobile.

Dans ce cas, le moyen de rappel peut être inhérent au positionnement de la portion tubulaire évasée et au poids de la pièce mobile. Plus précisément, le moyen de rappel peut être inhérent à l'élévation de l'orifice ayant la section la plus large de la portion tubulaire évasée au-dessus de l'orifice ayant la section la plus petite de ladite portion. Ainsi, dans ce cas, la pièce mobile présente, en outre, de par son propre poids et du fait du positionnement de la portion évasée, la fonction du moyen de rappel.

Le moyen de rappel peut également comporter, ou être essentiellement constitué par, un ressort.

Afin d'optimiser l'étanchéité de la vanne en position de fermeture, la portion tubulaire évasée et la pièce mobile peuvent prendre toute forme permettant à la pièce mobile en position de fermeture de coopérer avec la portion tubulaire évasée pour réaliser cette étanchéité. De préférence, la portion tubulaire évasée présente la forme d'un tronc de cône et la pièce mobile présente la forme d'une bille ou d'un tronc de cône.

Selon un autre mode de réalisation préférée, la vanne du moyen de dérivation comporte :

- au moins une plaque montée mobile autour d'un axe sur une extrémité du conduit du moyen de dérivation de manière à autoriser un déplacement entre une position de fermeture et une position d'ouverture maximale, le positionnement de ladite plaque étant fonction du débit de fluide dans le moyen de dérivation, et
- un moyen de rappel agissant sur la ou les plaque(s) pour la déplacer vers la position de fermeture lors de laquelle la ou les plaque(s) obstrue(nt) l'extrémité du conduit.

Dans cet autre mode de réalisation, le moyen de rappel peut comporter, de préférence, une tige dans le prolongement de la plaque et une masse localisée à l'extrémité libre de la tige et agissant comme un contrepoids par rapport à l'axe de mobilité de la plaque.

Le moyen de dérivation peut être positionné de différente manière par rapport au lit de particules solides. Les positions des extrémités inférieure et supérieure du conduit du moyen de dérivation peuvent être déterminantes pour la mise en oeuvre dudit moyen de dérivation

Selon un mode de l'invention, l'extrémité inférieure du conduit du moyen de dérivation débouche au-dessous du lit de particules solides. Ce positionnement permet de dévier une quantité minimum de fluide, et ceci quel que soit l'étendue du volume de lit colmaté.

Alternativement, l'extrémité inférieure du conduit du moyen de dérivation peut déboucher dans le lit de particules solides, ladite extrémité étant équipée d'un moyen empêchant le passage des particules solides dans ledit conduit. Ce positionnement de l'extrémité inférieure a l'avantage d'assurer un niveau minimum de mise en contact du fluide avec les particules solides du lit. Ce mode est particulièrement intéressant quand le colmatage s'effectue principalement et en premier au niveau supérieur du lit. Des moyens de dérivation dont les extrémités inférieures débouchent à différents niveaux dans le lit de particules solides peuvent permettre d'optimiser le contact du fluide avec lesdites particules solide au fur et à mesure du colmatage de ce lit.

Dans ce mode alternatif, dans lequel l'extrémité inférieure du conduit du moyen de dérivation débouche dans le lit de particules solides, le moyen empêchant le passage des particules solides peut être n'importe quel moyen connu de l'homme du métier. De préférence, le moyen empêchant le passage des particules solides dans le conduit du moyen de dérivation comporte, de préférence, une cage ayant des parois perforées et renfermant l'extrémité inférieure dudit conduit.

Le dispositif de l'invention peut être mis en oeuvre quelle que soit la direction d'écoulement du ou des fluide(s). Ainsi il est possible d'envisager l'écoulement de d'un fluide gazeux et d'un fluide liquide, c'est à dire un écoulement diphasique, dans une même direction, c'est à dire un écoulement co-courant, ou dans des directions opposées, c'est à dire un écoulement à contrecourant.

Selon un autre mode de l'invention, le lit de particules solides est surmonté par un plateau de distribution comportant une plaque au-dessus de laquelle s'accumule un fluide liquide et l'extrémité supérieure du conduit du moyen de dérivation débouche au-dessus de ladite plaque. Le plateau de distribution au-dessus du lit permet généralement d'obtenir une distribution uniforme du fluide liquide s'écoulant vers le bas sur toute la surface supérieure du lit.

Dans un premier cas, l'extrémité supérieure du conduit du moyen de dérivation peut déboucher au même niveau que la face supérieure de la plaque du plateau de distribution. Dans ce cas, au moins une portion du fluide liquide s'écoulant au-dessus du plateau de distribution est systématiquement envoyée dans le moyen de dérivation.

Dans un deuxième cas, l'extrémité supérieure du conduit du moyen de dérivation peut déboucher à une hauteur H par rapport à la face supérieure de la plaque du plateau de distribution. Dans ce cas, l'écoulement du fluide liquide dans le moyen de dérivation commence à partir du moment où le niveau de fluide liquide accumulé dans le plateau de distribution dépasse la hauteur H à laquelle débouche l'extrémité supérieure dudit conduit de dérivation par rapport à ladite plaque.

Selon un mode à écoulement co-courant descendant, le dispositif, dans lequel un fluide gazeux et un fluide liquide circulent à travers au moins un lit de particules solides selon une direction descendante, comporte :

- au moins un premier moyen de dérivation débouchant au même niveau que la face supérieure de la plaque du plateau de distribution, et
- au moins un deuxième moyen de dérivation débouchant à un niveau supérieur par rapport à un niveau maximum de fluide liquide accumulé dans le plateau de distribution.

Ce mode de réalisation permet de dissocier l'écoulement des deux fluides liquide et gazeux dans deux moyens de dérivation séparés. Dans ce mode de réalisation le premier et le deuxième moyen de dérivation sont respectivement dédiés au dérivation du fluide liquide et du fluide gazeux.

Selon un autre mode de réalisation, le dispositif est mis en oeuvre avec un écoulement à contre-courant, c'est à dire un dispositif dans lequel un fluide gazeux et un fluide liquide circulent à contre-courant à travers au moins un lit de particules solides.

Le dispositif peut comporter plusieurs lits de particules. De préférence, une pluralité de lits de particules solides est mise en oeuvre et au moins un desdits lits est équipé d'au moins un moyen de dérivation d'au moins une portion d'un fluide à travers au moins une portion dudit lit de particules solides.

Description détaillée des figures

Pour une meilleure compréhension, plusieurs modes de réalisation du dispositif de l'invention sont illustrés par les Figures 1 à 9. Ces modes de réalisation sont donnés à titre d'exemples et ne présentent aucun caractère limitatif. Ces illustrations du dispositif de l'invention ne comportent pas l'ensemble des composantes nécessaires à sa mise en oeuvre. Seuls les éléments nécessaires à la compréhension de l'invention y sont représentés, l'homme du métier étant capable de compléter ces représentations pour réaliser et mettre en oeuvre l'invention.

La Figure 1 représente un mode de réalisation du dispositif de l'invention comprenant une enceinte 1, représentée partiellement, dans laquelle est disposé un lit granulaire 2. Ce lit est composé d'un ensemble de particules solides retenu par une grille support 3 . Le lit peut comporter, par exemple, des grains de catalyseurs dans le cas d'un réacteur utilisé pour des procédés chimiques mettant en oeuvre une réaction en catalyse hétérogène. Le lit granulaire est traversé par un écoulement descendant de gaz représenté par la flèche 4.

Le dispositif comporte un moyen de dérivation 5 qui traverse le lit 2 sur toute sa hauteur et un moyen de dérivation 6 qui traverse le lit 2 sur une partie seulement de sa hauteur.

Le moyen de dérivation 5 comporte un conduit 7 dont l'extrémité inférieure comporte une vanne 8 permettant d'obturer l'ouverture du tube ou de laisser progressivement le passage à un écoulement. La vanne 8 comporte une portion en tronc de cône 9, dont l'orifice ayant la plus petite section est reliée à l'extrémité inférieure du conduit 7 du dispositif de dérivation 5, et une pièce mobile 10 montée dans ledit tronc de cône de manière à autoriser un déplacement entre une position de fermeture et une position d'ouverture maximale.

De la même façon, le moyen de dérivation 6 comporte un conduit 11, une vanne, ladite vanne comportant une portion en tronc de cône 13 et une pièce mobile 14. Dans ce mode de réalisation, les parties inférieures des conduits de chaque moyen de dérivation ont la forme d'un "U" ce qui permet d'orienter vers la haut l'orifice de la portion en tronc de cône ayant la section la plus large, le moyen de rappel agissant donc par la seule force de gravité inhérente au poids de la pièce mobile.

Le moyen de dérivation 6 comporte, à son extrémité inférieure, une cage 12 présentant des parois perforées pour favoriser la mise en contact du gaz avec la partie du lit granulaire autour de cette extrémité inférieure du moyen de dérivation 6.

En fonctionnement normal, les moyens de dérivation 5 et 6 sont fermés et les pièces mobiles 10 et 14 obturent toute la section de passage des conduits 7 et 11. Lorsque au cours de l'opération des particules viennent obstruer des interstices du lit granulaire 2, la pression différentielle à travers le lit augmente. Lorsque cette pression différentielle atteint une valeur donnée, appelée valeur seuil, une partie de l'écoulement va être déviée par les moyens de dérivation 5 et 6. La pression amont dans les moyens de dérivation devient ainsi suffisante pour compenser le poids des pièces mobiles 10 et 14. Il est donc possible de régler la valeur seuil de pression différentielle en choisissant la masse des pièces mobiles 10 et 14. La section de passage totale offerte par les conduits 7 et 11 des moyens de dérivation 5 et 6 doit être suffisante pour que la pression différentielle occasionnée par le frottement sur la surface interne des conduits, lors de l'écoulement dans ces conduits, soit très inférieure à la pression différentielle seuil. Au fur et à mesure que la pression différentielle à travers le lit 2 augmente, l'équilibre des pressions entre l'entrée et la sortie du lit catalytique force l'écoulement a être dévié par les moyens de dérivation. L'augmentation de la pression dans les moyens de dérivation 5 et 6 entraîne la montée de pièces mobiles 10 et 14 dans le tube de section conique de façon à laisser une section de passage plus importante pour l'écoulement, tout en opposant une force de pression à peu prés constante puisqu'elle correspond essentiellement à la force nécessaire pour faire maintenir les pièces mobiles en position de "lévitation". De cette façon le lit 2 continue à être traversé sans augmentation supplémentaire significative de la pression différentielle. Ainsi, le réacteur peut continuer à fonctionner jusqu'au colmatage total du lit.

La Figure 2 représente un autre mode de réalisation du dispositif de l'invention dans lequel on est en présence d'un écoulement diphasique descendant de gaz et de liquide.

Ce mode de réalisation comprend une enceinte 21, représentée partiellement, dans laquelle est disposé un lit granulaire 22. Ce lit est composé d'un ensemble de particules solides retenu par une grille support 23 . Le lit granulaire est traversé par un courant de liquide et un courant gazeux représentés par les flèches 24 et 25.

Le dispositif comporte un plateau de distribution 26 disposé en amont du lit granulaire. Ce plateau permet de distribuer l'écoulement de liquide et de gaz sur toute la section du lit granulaire. Ce plateau de distribution comporte, dans ce cas, des tubes 27 pour le passage du gaz et des orifices 28 pour le passage du liquide. Un niveau de liquide 29 s'établit au-dessus du plateau 26 de façon à alimenter de façon homogène tous les orifices 28.

Le lit granulaire 22 situé en aval du plateau 26 étant susceptible de se colmater au cours de son fonctionnement, deux moyens de dérivation 31 et 32 sont installés au travers du lit granulaire pour palier à ce problème. Le moyen 31 débouche au-dessus du niveau de liquide le plus haut et permet ainsi de dévier l'écoulement de gaz du lit catalytique. Le moyen 32 est relié à la base du plateau 26 et permet de dévier l'écoulement de liquide. Les moyens 31 et 32 débouchent en aval du lit granulaire 22 et en amont d'un deuxième plateau de distribution 41. Les pièces mobiles 43 et 44 doivent être dimensionnées pour que la force de "lévitation" de ces pièces dans le gaz et le liquide corresponde à la force résultante de la même pression différentielle seuil pour un rapport de débit gaz/liquide donné. De cette façon, lorsque le lit commence à se colmater, l'écoulement de gaz et de liquide est dévié avec le même rapport de débit gaz/liquide. Le système peut ainsi fonctionner jusqu'au colmatage complet du lit granulaire 22. A ce moment là, les deux plateaux sont reliés l'un à l'autre.

La Figure 3 représente un mode de réalisation correspondant à un écoulement contre-courant de gaz et de liquide.

Le dispositif représenté comprend une enceinte 51, représentée partiellement, dans laquelle est disposé un lit granulaire 52. Ce lit est composé d'un ensemble de particules solides retenu par une grille support 53.

Un moyen de dérivation 54 permet de dévier un courant ascendant gazeux ou liquide. Le moyen de dérivation comporte un conduit 55 dont l'extrémité supérieure est reliée à une vanne 56 permettant d'obturer l'ouverture du conduit ou de laisser progressivement le passage à un écoulement. La vanne 56 comporte une portion en tronc de cône 57, dont l'orifice ayant la plus petite section est reliée à l'extrémité supérieure du conduit 55, et une pièce mobile 58 montée dans ledit tronc de cône de manière à autoriser un déplacement entre une position de fermeture et une position d'ouverture maximale. Notons que, dans ce cas, l'orientation de la portion tronconique et le poids de la pièce mobile sont inhérents du moyen de rappel agissant par la seule force de gravité. Notons également que la portion supérieure du conduit n'a pas besoin d'être coudée.

Un moyen de dérivation 61 permet une mise en oeuvre pour dévier un courant descendant. Le moyen de dérivation 61 comporte un conduit 62 dont l'extrémité inférieure est reliée à une vanne 63 permettant d'obturer l'ouverture du conduit ou de laisser progressivement le passage à un écoulement. La vanne 63 comporte une portion en tronc de cône 64, dont l'orifice ayant la plus petite section est reliée à l'extrémité supérieure du conduit 62, et une pièce mobile 65 montée dans ledit tronc de cône de manière à autoriser un déplacement entre une position de fermeture et une position d'ouverture maximale. Comme pour le moyen de dérivation 54, l'orientation de la portion tronconique et le poids de la pièce mobile sont inhérents du moyen de rappel agissant par la seule force de gravité. Contrairement au moyen de dérivation 54, l'extrémité inférieure du conduit 62 à laquelle est rattachée la vanne 63 doit être coudée pour orienter correctement la portion tronconique 64.

Lorsque l'écoulement est à contre-courant de gaz et de liquide, le système représenté reste utilisable. Par exemple, dans le cas où le lit granulaire est traversé par un écoulement descendant de liquide et un écoulement ascendant de gaz, le moyen de dérivation 64 est utilisé pour dévier l'écoulement de liquide au moment du colmatage du lit et le moyen de dérivation 54 est utilisé pour dévier l'écoulement ascendant de gaz.

La Figure 4 représente un mode de réalisation de la vanne du moyen de dérivation du dispositif de l'invention. Seules la vanne 101 et la partie inférieure 102 du conduit du moyen de dérivation sont représentés.

La vanne 101 comporte une portion en tronc de cône 103 dont l'orifice ayant la plus petite section est reliée à l'extrémité inférieure de la partie inférieure 102 du conduit du moyen de dérivation. Une pièce mobile 104 est montée dans la portion en tronc de cône 103 de manière à autoriser un déplacement entre une position de fermeture et une position d'ouverture maximale. L'extrémité supérieure de la section en tronc de cône est fermée par une grille 105 qui laisse passer l'écoulement mais empêche l'évacuation de la pièce mobile. Cette grille est particulièrement utile lorsqu'il se produit une montée soudaine et momentanée de la pression, par exemple à cause d'une erreur dans le contrôle des conditions opératoires.

Dans ce mode de réalisation, la pièce mobile 104 a la forme d'un tronc de cône sur lequel des rainures peuvent être ajoutées pour faciliter l'écoulement autour de ladite pièce et rendre son mouvement plus stable. Les dimensions de la pièce mobile sont telles que celle ci coopère, en position de fermeture, avec la surface interne de la portion en tronc de cône 103 pour permettre une bonne étanchéité.

Au fur et à mesure que le débit augmente à travers le moyen de dérivation, la pièce mobile s'élève en laissant une section de passage plus grande à l'écou-

$$\frac{A}{Ao} * \frac{Q}{Qo}$$

lement de façon à maintenir le rapport entre 0,1 et 10, A et Q correspondant respectivement à la section de passage et au débit à travers la vanne, Ao et Qo correspondant respectivement à la section de passage nominale et au débit nominal de ladite vanne.

La Figure 5 représente un deuxième mode de réalisation de la vanne du moyen de dérivation du dispositif de l'invention. De manière similaire à la représentation de la Figure 4, la Figure 5 représente une vanne 201 et la partie inférieure 202 du conduit du moyen de dérivation. La vanne 201 comporte une portion en tronc de cône 203 dont l'orifice ayant la plus petite section est reliée à l'extrémité inférieure de la partie inférieure 202 du conduit du moyen de dérivation. La vanne comporte une pièce mobile 204 montée dans la portion en tronc de cône 203. L'extrémité supérieure de la section en tronc de cône est fermée par une grille 205.

Dans ce mode de réalisation, la pièce mobile 204 a la forme d'une bille. Les dimensions de la pièce mobile sont telles que celle ci coopère, en position de fermeture, avec la surface interne de la portion en tronc de cône 203 pour permettre une bonne étanchéité.

La Figure 6 représente un troisième mode de réalisation de la vanne du moyen de dérivation du dispositif de l'invention. Seules la vanne 301 et la partie inférieure 302 du conduit du moyen de dérivation sont représentés.

La vanne 301 comporte une plaque 303 montée mobile autour d'un axe 304 sur l'extrémité inférieure de la partie inférieure 302 du conduit du moyen de dérivation. Le montage est réalisé de manière à autoriser un déplacement entre une position de fermeture et une position d'ouverture maximale, le positionnement de ladite plaque étant fonction du débit de fluide dans le moyen de dérivation.

La vanne 301 comporte, en outre, un moyen de rappel agissant sur la plaque pour la déplacer vers la position de fermeture lors de laquelle la plaque obstrue l'extrémité du conduit. Dans ce mode de réalisation, le moyen de rappel comporte une tige 305 dans le prolongement de la plaque 303 et une masse 306 localisée à l'extrémité libre de la tige 305 et agissant comme un contrepoids par rapport à l'axe 304 de mobilité de la plaque.

L'axe 304 peut éventuellement être matérialisé par un ressort.

Les figures 7 à 9 sont décrites dans le cadre des exemples.

Exemples

Ces exemples d'application ont été produits par calcul afin de comparer le dispositif de l'invention à un dispositif de l'art antérieur mettant en oeuvre des moyens de dérivation équipés de disques de rupture.

L'exemple correspond à la mise en oeuvre d'un réacteur catalytique dans lequel sont disposés deux lits successifs ayant chacun une hauteur de 1 mètre. Le réacteur de diamètre égal à 1 mètre est traversé par un écoulement de gaz descendant. Une cinétique de dépôt de particules colmatantes est prise en compte sous la forme d'une variation linéaire de l'épaisseur de dépôt fonction du temps et du débit d'écoulement. Les caractéristiques du lit et du gaz sont décrites dans le tableau 1 suivant.

Tableau 1

| Diamètre des particules (m) | 0,002 |
|---|---|
| Porosité du lit (%) | 41 |
| Masse volumique du gaz (kg/m3) | 15 |
| Viscosité dynamique du gaz (Pa.s) | 0,00002 |
| Vitesse superficielle du gaz (m/s) | 0,1 |

Dans le cas du système de dérivation de l'art antérieur, une série de moyens de dérivation équipés de disques de rupture sont disposés à travers le 1er lit. Ces moyens de dérivation sont dimensionnés pour dévier 42 ou 100 % de l'écoulement de gaz lorsque la pression différentielle seuil est atteinte, c'est à dire la pression déclenchant l'ouverture des disques de rupture.

Dans le cas du système selon l'invention, une série de moyens de dérivation est disposée à travers le 1er lit. Chacun de ces moyens de dérivation comporte une vanne comprenant une portion tubulaire en tronc de cône à l'intérieure de laquelle est disposée une pièce mobile tronconique destinée à se mouvoir entre une position de fermeture et une position d'ouverture. La pièce mobile est dimensionnée pour être soulevée par la force d'une pression différentielle seuil de 0,04 MPa (1 bar=0,1 MPa).

L'évolution de la pression différentielle à travers chaque lit, DP1 et DP2, et la pression différentielle totale DP1+DP2, sont représentées en fonction du temps dans les figures 7 à 9.

La Figure 7 correspond à l'évolution des pressions différentielles dans le cas d'un dispositif selon l'invention comprenant 1 tube de dérivation de diamètre égal à 2 pouces (2" ; 1" = 2,54 cm)

Les figures 8 et 9 correspondent à l'évolution des pressions différentielles dans le cas d'un dispositif de l'art antérieur équipé de disques de rupture présentant la même pression différentielle seuil d'ouverture que celle du dispositif selon l'invention. Le dispositif de la Figure 8 est dimensionné de manière à dévier 42 % de l'écoulement de gaz lorsque la pression différentielle seuil est atteinte, il comprend 1 tube de dérivation de diamètre 1" équipé d'un disque de rupture. Le dispositif de la Figure 9 est dimensionné de manière à dévier 100 % de l'écoulement de gaz lorsque la pression différentielle seuil est atteinte, il comprend 1 tube de dérivation de diamètre 1,5" (3,81 cm) équipé d'un disque de rupture.

L'échelle des temps des figures 7 à 9 dépend directement de la cinétique de colmatage qui est la même dans le cas selon l'invention et dans les cas selon l'art antérieur. Ainsi, la mise en oeuvre d'une même cinétique de colmatage permet la comparaison directe du dispositif selon l'invention avec celui de l'art antérieur.

Dans le cas du dispositif selon l'invention, on constate (cf. Figure n°7) que la pression différentielle dans le 1er lit en amont, DP1, augmente rapidement jusqu'à atteindre le seuil de pression différentielle de 0,04 MPa à partir duquel la pièce mobile de la vanne commence à se déplacer de la position de fermeture vers la position d'ouverture.

La pression différentielle DP1 est ensuite maintenue constante du fait de l'augmentation progressive de la section de passage de la vanne et du débit à travers cette vanne.

Dès l'ouverture de la vanne du moyen de dérivation du 1er lit, le 2ème lit, qui est localisé en aval par rapport à l'écoulement, commence à se colmater progressivement. Il s'ensuit donc une augmentation progressive de la pression différentielle DP2 à travers le 2ème lit.

Dans le cas du dispositif selon l'art antérieur (cf. Figure 8 et 9), la pression différentielle DP1 à travers le 1er lit augmente, de la même façon, jusqu'à la pression différentielle seuil de 0,04 MPa (1 bar=0,1 MPa).

Ensuite, on observe une chute brutale de la pression différentielle du fait de l'ouverture soudaine du disque de rupture et les pressions différentielles DP1 et/ou DP2 à travers respectivement le 1er et le 2ème lit continuent à augmenter. Dans le cas où seulement 50% du débit est dévié lorsque DP1 est égal à 0,04 MPa (cf. Figure 8), les pressions différentielles DP1 et DP2 augmentent en même temps. Dans le cas où 100 % du débit est dévié à l'ouverture du disque de rupture (cf. Figure 9) seule la pression différentielle DP2 augmente, la pression différentielle DP1 restant constante et égale à la pression différentielle dans le tube de dérivation.

Si l'on considère que la pression différentielle maximum acceptable par les lits de catalyseurs est de 0,08 MPa, il est possible de déterminer pour chaque cas de figure quelles sont les durées de cycle au-delà desquelles les lit colmatés doivent être renouvelés. Cette pression différentielle maximum correspond également à la valeur au-delà de laquelle le réacteur n'est plus opérable. Cette valeur est généralement imposée par la pression maximum du compresseur.

En l'absence d'un moyen quelconque de dérivation, la durée de cycle, c'est dire le moment à partir duquel la pression différentielle dépasse dangereusement les 0,08 MPa est de 290 jours. Cette durée de cycle est déterminée par extrapolation de la courbe DP1 de la Figure 7.

De la même façon, on peut déterminer la durée de cycle pour le dispositif selon l'art antérieur à partir des figures 8 et 9. Dans le cas où seulement 50% du débit est dévié lorsque DP1 est égal à 0,4 MPa (cf. Figure 8), la durée de cycle est de 440 jours. Dans le cas où 100 % du débit est dévié à l'ouverture du disque de rupture (cf. Figure 9) seulement la pression différentielle DP2 augmente, la durée de cycle est de 555 jours

Dans le cas d'un dispositif selon l'invention, la durée de cycle peut être déterminée à partir de la Figure 7. La durée de cycle dans le cas de l'invention est de 600 jours, ce qui permet une opération sans arrêt, de 45 ou 160 jours de plus qu'avec un dispositif selon l'art antérieur, et de 310 jours de plus qu'avec un dispositif sans moyen de dérivation.

La mise en oeuvre de la présente invention permet d'obtenir un gain, en terme de durée d'opération, de 17 % à 180 % supérieur à celui obtenu avec un dispositif de l'art antérieur.

## Revendications

1. Dispositif pour la circulation d'un fluide gazeux et/ou liquide à travers au moins un lit de particules solides équipé d'au moins un moyen de dérivation agissant au moins sur une portion dudit fluide à travers au moins une portion d'un lit de particules solides, ledit moyen de dérivation comportant :

   - un conduit dont l'extrémité supérieure débouche au-dessus de la surface supérieure du lit de catalyseur et l'extrémité inférieure débouche dans le lit de particules solides, ladite extrémité étant équipée d'un moyen empêchant le passage des particules solides dans ledit conduit, et
   - une vanne, comportant :

      a) une portion tubulaire évasée présentant la forme d'un tronc de cône, dont l'orifice ayant la plus petite section est relié à une extrémité du conduit du dispositif de dérivation,
      b) une pièce mobile présentant la forme d'une bille ou d'un tronc de cône, montée dans la dite portion tubulaire évasée, consistant en une plaque montée mobile autour d'un axe sur une extrémité du conduit du moyen de dérivation de manière à autoriser un déplacement entre une position de fermeture et une position d'ouverture maximale, le positionnement de ladite plaque étant fonction du débit de fluide dans le moyen de dérivation, et
      c) un moyen de rappel agissant sur la pièce mobile pour la déplacer vers la position de fermeture dans laquelle la pièce mobile obstrue l'orifice de la portion tubulaire évasée ayant la plus petite section, ce déplacement ayant lieu sous l'effet de la force de gravité de ladite pièce mobile.

2. Dispositif selon la revendication 1, dans lequel le lit de particules solides est surmonté par un plateau de distribution comportant une plaque au-dessus de laquelle s'accumule un fluide liquide et l'extrémité supérieure du conduit du moyen de dérivation débouche au-dessus de ladite plaque.

3. Dispositif selon l'une quelconque des revendications 1 à 2, dans lequel l'extrémité supérieure du conduit du moyen de dérivation débouche au même niveau que la face supérieure de la plaque du plateau de distribution.

4. Dispositif selon l'une quelconque des revendications 1 à 2, dans lequel l'extrémité supérieure du conduit du moyen de dérivation débouche à une hauteur H par rapport à la face supérieure de la plaque du plateau de distribution.

5. Dispositif selon l'une quelconque des revendications 1 à 2, dans lequel l'extrémité inférieure du conduit du moyen de dérivation débouche au-dessous du lit de particules.

6. Dispositif selon l'une quelconque des revendications 1 à 2, dans lequel l'extrémité inférieure du conduit du moyen de dérivation débouche dans le lit de particules solides, ladite extrémité étant équipée d'un moyen empêchant le passage des particules solides dans ledit conduit.

7. Procédé utilisant le dispositif selon l'une quelconque des revendications 1 à 5, dans lequel un fluide gazeux et un fluide liquide circulent à travers au moins un lit de particules solides selon une direction descendante, le dispositif comportant :

   - au moins un premier moyen de dérivation débouchant au même niveau que la face supérieure de la plaque du plateau de distribution, et
   - au moins un deuxième moyen de dérivation débouchant à un niveau supérieur par rapport à un niveau maximum de fluide liquide accumulé dans le plateau de distribution.

8. Procédé utilisant le dispositif selon l'une quelconque des revendications 1 à 6, dans lequel la section de passage, A, de la vanne et le débit, Q, à travers ladite vanne varient de manière à ce que le rapport $A/A_0 * Q/Q_0$ soit compris entre 0,1 et 10, Ao et Qo correspondant respectivement à la section de passage et au débit nominal de la vanne.

## Patentansprüche

1. Vorrichtung für die Zirkulation eines gasförmigen und/oder flüssigen Fluids durch mindestens ein Feststoffpartikelbett, das mit mindestens einem Bypass ausgestattet ist, der mindestens auf einen Abschnitt des Fluids durch mindestens einen Abschnitt eines Feststoffpartikelbetts wirkt, wobei der Bypass umfasst:

   - eine Leitung, deren oberes Ende über der Oberseite des Katalysatorbetts mündet, und deren unteres Ende in das Feststoffpartikelbett mündet, wobei das Ende mit einem Mittel ausgestattet ist, das den Durchgang der Feststoffpartikel in der Leitung verhindert, und
- ein Ventil, umfassend:

a) einen erweiterten röhrenförmigen Abschnitt, der die Form eines Kegelstumpfes aufweist, dessen Öffnung mit dem kleinsten Querschnitt mit einem Ende der Leitung des Bypasses verbunden ist,
b) ein bewegliches Teil, das die Form einer Kugel oder eines Kegelstumpfes aufweist, das in dem erweiterten röhrenförmigen Abschnitt montiert ist, bestehend in einer Platte, die beweglich um eine Achse auf einem Ende der Leitung des Bypasses montiert ist, um eine Verlagerung zwischen einer Verschlussposition und einer maximalen Öffnungsposition zu gestatten, wobei die Positionierung der Platte von der Fluidmenge in dem Bypass abhängt, und
c) ein Rückstellmittel, das auf das bewegliche Teil einwirkt, um es zu der Verschlussposition zu verlagern, in der das bewegliche Teil die Öffnung des erweiterten röhrenförmigen Abschnitts mit dem kleinsten Querschnitt verschließt, wobei diese Verlagerung unter der Wirkung der Schwerkraft des beweglichen Teils stattfindet.

2. Vorrichtung nach Anspruch 1, bei der über dem Feststoffpartikelbett ein Verteilungsplateau montiert ist, umfassend eine Platte, über der sich ein flüssiges Fluid ansammelt, und das obere Ende der Leitung des Bypasses über der Platte mündet.

3. Vorrichtung nach einem der Ansprüche 1 bis 2, bei der das obere Ende der Leitung des Bypasses auf derselben Höhe wie die Oberseite der Platte des Verteilungsplateaus mündet.

4. Vorrichtung nach einem der Ansprüche 1 bis 2, bei der das obere Ende der Leitung des Bypasses auf einer Höhe H in Bezug zur Oberseite der Platte des Verteilungsplateaus mündet.

5. Vorrichtung nach einem der Ansprüche 1 bis 2, bei der das untere Ende der Leitung des Bypasses unter dem Partikelbett mündet.

6. Vorrichtung nach einem der Ansprüche 1 bis 2, bei der das untere Ende der Leitung des Bypasses in dem Feststoffpartikelbett mündet, wobei das Ende mit einem Mittel ausgestattet ist, das den Durchgang der Feststoffpartikel in der Leitung verhindert.

7. Verfahren, das die Vorrichtung nach einem der Ansprüche 1 bis 5 verwendet, bei dem ein gasförmiges Fluid und ein flüssiges Fluid durch mindestens ein Feststoffpartikelbett in eine absteigende Richtung zirkulieren, wobei die Vorrichtung umfasst:

- mindestens einen ersten Bypass, der auf derselben Höhe wie die Oberseite der Platte des Verteilungsplateaus mündet, und
- mindestens einen zweiten Bypass, der auf einer höheren Ebene als ein maximales Niveau eines flüssigen Fluids, das in dem Verteilungsplateau angesammelt ist, mündet.

8. Verfahren, das die Vorrichtung nach einem der Ansprüche 1 bis 6 verwendet, bei dem der Durchgangsquerschnitt A des Ventils und die Durchgangsmenge Q durch das Ventil derart variieren, dass das Verhältnis $A/A_0 * Q/Q_0$ zwischen 0,1 und 10 beträgt, wobei $A_0$ und $Q_0$ dem Durchgangsquerschnitt bzw. der Nominaldurchgangsmenge des Ventils entsprechen.

**Claims**

1. Device for circulation of a gaseous and/or liquid fluid through at least one solid particle bed equipped with at least one bypass means acting on at least one part of said fluid through at least one part of a solid particle bed, said bypass means comprising:

- a pipe whose top end discharges above the upper surface of the catalyst bed and whose bottom end discharges into the solid particle bed, said end being equipped with a means preventing the passage of the solid particles into said pipe, and
- a valve, comprising :

a) a widened tubular part having the shape of a truncated cone, whose orifice with the smallest cross-section is connected to one end of the pipe of the bypass device,
b) a movable piece having the shape of a ball or a truncated cone, mounted in said widened tubular part, consisting of a plate mounted to be able to move around one axis on one end of the pipe of the bypass means in such a manner as to allow displacement between a closed position and a maximum open position, the positioning of said plate being dependent on the fluid flow rate in the bypass means, and
c) a return means acting on the movable piece to move it toward the closed position in which the movable piece blocks the orifice of the widened tubular part with the smallest cross-section, the return means acts by the force of gravity of the movable piece.

**2.** Device according to claim 1, wherein the solid particle bed is topped by a distribution plate comprising a plate above which a liquid fluid accumulates, and the top end of the pipe of the bypass means discharges above said plate.

**3.** Device according to any of claims 1 to 2, wherein the top end of the pipe of the bypass means discharges at the same level as the upper surface of the plate of the distribution plate.

**4.** Device according to any of claims 1 to 2, wherein the top end of the pipe of the bypass means discharges at a height H relative to the upper surface of the plate of the distribution plate.

**5.** Device according to any of claims 1 to 2, wherein the bottom end of the pipe of the bypass means discharges under the solid particle bed.

**6.** Device according to any of claims 1 to 2, wherein the bottom end of the pipe of the bypass means discharges into the solid particle bed, said end being equipped with a means preventing the passage of the solid particles into said pipe.

**7.** Process using the device according to any of claims 1 to 5, wherein a gaseous fluid and a liquid fluid circulate through at least one solid particle bed in a downward direction, the device comprising:

- at least one first bypass means discharging at the same level as the upper surface of the plate of the distribution plate, and
- at least one second bypass means discharging at a higher level relative to a maximum level of liquid fluid that has accumulated in the distribution plate.

**8.** Process using the device according to any of claims 1 to 6, wherein the passage section A of the valve and the flow rate, Q, through said valve vary in such a way that the ratio $\frac{A}{Ao} * \frac{Q}{Qo}$ is between 0.1 and 10, Ao and Qo corresponding respectively to the passage section and to the nominal flow rate of the valve respectively.

**Figure 1**

**Figure 2**

**Figure 3**

101    105

104

103

102

**Figure 4**

201    205

204

203

202

**Figure 5**

301

306

305  303

302

304

**Figure 6**

**Figure 7**

(1 bar=0,1 MPa)

**Figure 8**

(1 bar=0,1 MPa)

## Figure 9

**EP 1 640 062 B1**

## RÉFÉRENCES CITÉES DANS LA DESCRIPTION

**Documents brevets cités dans la description**

- US 3796655 A

- US 5939031 A